# EUROPEAN PATENT APPLICATION

(11) **EP 4 398 228 A1**
(43) Date of publication of application: **10.07.2024**
(21) Application number: 23150622.1
(22) Date of filing: 06.01.2023
(51) Int. Cl.: G09F 19/12, G09F 21/04, G09F 13/06

(54) **AN OPTICAL STRUCTURE COMPRISING A TEXTURED LAYER WITH A PLURALITY OF MICRO-PERFORATIONS**

(71) Applicant: DAV, 94000 Créteil (FR)
(72) Inventor: EL OUARDI, Nour Eddine, 94000 Créteil (FR); HEIM, Adrien, 94000 Créteil (FR); MARTINEZ GOTTSCHALK, Jose, 94000 Créteil (FR); HENTSCHEL, Joachim, 94000 Créteil (FR)
(74) Representative: Delplanque, Arnaud

(57) **Abstract**

The present invention relates to an optical structure (6) configured to be placed in front of an image emitting device (4) configured to emit an initial image adjusted by the optical structure (6) to form an adjusted image visible to an observer (8). Said optical structure (6) comprises:
- a textured layer (10) placed on an observer's side (8) of the optical structure (6),
- a protective layer (18) placed between the textured layer (10) and the image emitting device (4), said protective layer (18) is preferably a light transmitting protective layer (18),
wherein said optical structure (6) comprises a plurality of micro-perforations (12) in the textured layer (10) and in the protective layer (18), said micro-perforations having dimensions below 100 µm, and
said micro-perforations (12) are arranged such that the adjusted image is perceived through said micro-perforations (12) by the observer (8).

## Description

The invention relates to an optical structure configured to be placed in front of an image emitting device configured to emit an initial image adjusted by the optical structure to form an adjusted image visible to an observer. The invention further relates to an image display system comprising such an optical structure. The invention also relates to a method of manufacturing such an optical structure.

WO 2021 200 344 A1 discloses an example of a display device having a decorative sheet including a design layer with micro-holes on which a design is printed with ink. The decorative sheet has a transparent sheet covering such design layer.

Vehicles are generally equipped with display systems which communicate to the driver various information such as speed and temperature data. Such a display system is integrated in a vehicle dashboard. Said dashboard may for instance comprise areas with a decorative layer with a wood vein appearance. There is a need to display images on such kind of areas.

The present invention aims to meet this need.

This aim is achieved by an optical structure configured to be placed in front of an image emitting device configured to emit an initial image adjusted by the optical structure to form an adjusted image visible to an observer, and said optical structure comprising:
- a textured layer placed on an observer's side of the optical structure,
- a protective layer placed between the textured layer and the image emitting device, said protective layer is preferably a light transmitting protective layer,

wherein said optical structure comprises a plurality of micro-perforations in the textured layer and in the protective layer, said micro-perforations having dimensions below 100 µm, and
said micro-perforations are arranged such that the adjusted image is perceived through said micro-perforations by the observer.

By "dimension" is meant the distance between two points of a contour of the micro-perforations.

It is remarkable that the presence of micro-perforations in said textured layer improves the image sharpness by correcting the light scattering occurring at the textured layer and at the protective layer.

As a result, the adjusted image passing through the micro-perforations has an improved sharpness compared with an adjusted image passing through the textured layer and the protective layer without any micro-perforation.

Furthermore, this invention provides a textured layer that can be perceptible by the touch of a human body part, together with an adjusted image with an improved sharpness on this textured layer.

By "image" is meant any kind of images such as motion image, static image or successive series of images. This definition applies to both "initial image" and "adjusted image". The "image" is used to display, in a non-exhaustive manner, the following information: "GPS information", "Speed counter", "Temperature information", "Tachymeter", "Decorative information" etc.

The "protective layer" provides protection against scratches to increase the general durability of the optical structure.

According to an aspect of the invention, the textured layer and the protective layer have substantially a same chemical composition.

According to an aspect of the invention, the textured layer and the protective layer are made of ink, or made of varnish.

According to an aspect of the invention, the optical structure further comprises successively, from the observer's side to the image emitting device:
- a light transmitting interlayer, in particular made of a material selected from polymethyl methacrylate (PMMA), and other polymers having optical properties and hardness equivalent to those of PMMA; and
- a decorative layer.

According to an aspect of the invention, the decorative layer comprises a decoration formed by:
- visible patterns forming a decoration that is visible from the observer's side.

The decorative layer allows the adjusted image to be correctly visible and readable by an observer despite the presence of the decoration.

According to an aspect of the invention, the protective layer is configured to contribute to the decoration, for example, by modifying the appearance including color, opacity and glossy or matte finished aspect of the visible patterns of the decorative layer.

According to an aspect of the invention, the textured layer is configured to contribute to the decoration, for example, by modifying the appearance including color, opacity and glossy or matte finished aspect of the visible patterns of the decorative layer.

According to an aspect of the invention, the textured layer has a plurality of tactile patterns, the dimensions of which are selected so that said tactile patterns can be perceptible by the touch of a human body part.

According to an aspect of the invention, the tactile patterns are, for example, chosen among the following patterns:
- wood veins, hair lines, geometric tones, silk fabric, grippy texture, rubber texture.

According to an aspect of the invention, the height of each tactile pattern is superior to 5 µm.

According to an aspect of the invention, the width of each tactile pattern is ranging between 200 µm and 5 mm.

According to an aspect of the invention, visible patterns have a shape of the following patterns:
- wood veins, hair lines, geometric tones, silk fabric, grippy texture, rubber texture.

According to an aspect of the invention, each tactile pattern has a region with a plurality of micro-perforations.

These micro-perforations having the dimensions below 100 µm are not discernable by the touch of human body part. Therefore, the tactile sensations are only provided by the presence of one or a plurality of tactile patterns. For example, when the tactile pattern imitates a cross-section of a wood, each tactile pattern corresponding to a wood vein has a region with a plurality of micro-perforations. These micro-perforations are sufficiently small that the observer can only see an overall picture of the group, but not an individual micro-perforation.

According to an aspect of the invention, the textured layer is entirely micro-perforated.

According to an aspect of the invention, each tactile pattern is entirely micro-perforated.

The dimensions of micro-perforations are below 100 µm, preferably are ranging from 20 to 80 µm, preferably from 30 to 70 µm.

According to an aspect of the invention, the tactile patterns of the textured layer overlap the visible patterns of the decorative layer.

For example, each tactile pattern in the textured layer corresponds to the visible pattern (i.e. wood vein, leather grain) in the decorative layer that has the appearance of the cross-section of a wood or the appearance of a genuine leather.

According to an aspect of the invention, the width of each visible pattern is ranging between 200 µm and 5 mm.

According to an aspect of the invention, said micro-perforations extend at least through the thickness of the textured layer and the protective layer.

According to an aspect of the invention, the protective layer is entirely micro-perforated.

According to an aspect of the invention, said micro-perforations extend only through the thickness of the textured layer and the protective layer.

In this case, the other layers underneath the textured layer and the protective layer are not micro-perforated.

According to an aspect of the invention, said micro-perforations extend at least through the thickness of the textured layer, the protective layer, and the light transmitting interlayer.

According to an aspect of the invention, micro-perforations extend through the thickness of the textured layer, the protective layer, the light transmitting interlayer and the decorative layer.

In this case, the other layers underneath textured layer, the protective layer, the light transmitting interlayer and the decorative layer are not micro-perforated.

According to an aspect of the invention, the optical structure further comprises a light transmitting reinforcing layer placed between the decorative layer and the image emitting device.

According to an aspect of the invention, the light transmitting reinforcing layer is made of a material selected from polycarbonate (PC) and other polymers having mechanical properties and high temperature stability equivalent to those of PC.

According to an aspect of the invention, the decorative layer is semi-translucent or semi-transparent.

The semi-translucent or semi-translucent decorative layer allows the adjusted image to be correctly visible and readable by an observer despite the presence of the decoration.

By "transparent" is meant a material or a layer allowing light or image to pass through so that objects behind can be distinctly seen. In other words, the objects behind a "transparent" material or a "transparent" layer are clearly visible through said material or said layer.

By "opaque" is meant a material or a layer that is not clear enough to see through or allow light or image through. In other words, the term "opaque" is an opposite word to the term "transparent".

By "translucent" is meant a material or a layer that is almost transparent, allowing some light or image through a "translucent" material or "translucent" layer. In other words, the objects behind a "translucent" material or a "translucent" layer are visible in a blurred manner through said material or said layer.

By "semi-transparent" is meant a material or a layer which is less transparent than a "transparent" material or a "transparent" layer.

By "semi-translucent" is meant a material or a layer which is less translucent than a "translucent" material or a "translucent" layer.

According to an aspect of the invention, the light transmitting interlayer is transparent, semi-transparent or semi-translucent.

According to an aspect of the invention, the textured layer is opaque, semi-translucent or semi-transparent.

According to an aspect of the invention, the protective layer is opaque, semi-translucent or semi-transparent.

According to an aspect of the invention, the texturing layer and/or the decorative layer comprises ink.

According to an aspect of the invention, said textured layer comprises an opaque ink, a semi-translucent ink or a semi-transparent ink.

The use of such inks can be combined with the presence of micro-perforations. In particular, thanks to the presence of micro-perforation, the image from the image emitting device can pass through the textured layer despite the presence of an opaque ink.

Said semi-transparent ink and said translucent ink partially filters the initial image from the image emitting device, whereas said opaque ink completely filters the initial image from the image emitting device.

For example, a "semi-transparent" ink can be used for the decorative layer when the image emitting device is displaying an image defined above.

For example, a "semi-translucent" ink with a slight light scattering property can be used when the image emitting device is a light emitting device such as a backlit symbol lighted by LEDs, said backlit symbol providing visibility in dark ambient light conditions. The slight scattering property of said semi-translucent ink allows for better light adjustment so that the light passing through the material or layer containing such ink becomes more homogenous. This prevents the light emitted by said backlit symbol from becoming too intense in certain areas, forming light "hot spots".

According to an aspect of the invention, the light transmittance of the optical structure is lower than 50%, preferably lower than 40%. The light transmittance is ranging between 15 and 35%.

Thanks to the enhanced light transmittance of the optical structure, for example, the decorative layer is clearly visible on the observer's side when the image emitting device is switched off.

When the image emitting device is switched on, the visible patterns of the decorative allow a partial transmission of the image from the image emitting device, making the decorative layer faintly visible, while the visible patterns of the decorative layer are clearly visible. When the light transmittance is too low, for example below 15 %, the visible patterns are not clearly visible from the observer's side. When the image emitting device is switched off, a very high transmittance of the optical structure will cause no visibility of the decorative pattern, but only the black display behind instead. Thus, the indicated ranges represent a good compromise between the visibility of said visible patterns from the observer's side and transmittance of light through the optical structure.

According to an aspect of the invention, the sectional view of said micro-perforations has at least one of the shapes selected from among the following shapes: circular shape, oval shape, elliptical shape, polygonal shape.

For example, when the micro-perforations have a circular shape, the largest dimension of the circular micro-perforations, i.e., the diameter of the circular shape, is below 100 µm.

For example, when the micro-perforations have an oval shape, the largest dimension of the oval micro-perforations, is below 100 µm.

According to an aspect of the invention, the surface of the textured layer is treated to have at least one of the following properties: antibacterial, hard-coated, anti-reflective, low-reflective, anti-glare coated, anti-fingerprint, and sparkling reductive.

According to an aspect of the invention, the micro-perforation of the textured layer is achieved with at least one of the following techniques: laser and/or mechanical perforating.

These techniques allow to micro-perforate partially or completely the textured pattern. For example, in case of the textured layer comprising peaks and valleys, both peaks and valleys can be micro-perforated, preferably with a laser allowing to excavate a same depth.

The invention also relates to an image display system comprising:
- a display panel forming the image emitting device; and
- the optical structure according to the invention placed on the observer's side of the image display system.

According to an aspect of the invention, the image display system further comprises:
- a touch panel;
- at least one extruded plastic layer, such as a thermoplastic layer;
- at least one clear adhesive layer, such as optical clear adhesive (OCA) layer or optical clear resin (OCR) layer; and/or
- at least one support substrate made of a material such as polycarbonate (PC) or a glass.

The "support substrate" is an intermediate protection plate to protect the optical structure and the display panel from any mechanical stresses.

According to an aspect of the invention, the optical structure is on the support substrate.

According to an aspect of the invention, the image display system comprises successively, from the observer's side to the image emitting device:
- the optical structure according to the invention;
- the at least one support substrate between two clear adhesive layers; and
- the display panel forming the image emitting device.

According to an aspect of the invention, the image display system comprises successively, from the observer's side to the image emitting device:
- the optical structure according to the invention;
- the at least one support substrate between two clear adhesive layers;
- the touch panel on a clear adhesive layer; and
- the display panel forming the image emitting device.

According to an aspect of the invention, the image display system comprises successively, from the observer's side to the image emitting device:
- the optical structure according to the invention;
- the extruded plastic layer;
- the clear adhesive layer; and
- the display panel forming the image emitting device.

According to an aspect of the invention, the image display system comprises successively, from the observer's side to the image emitting device:
- the optical structure according to the invention;
- the extruded plastic layer;
- the touch panel between two clear adhesive layers; and
- the display panel forming the image emitting device.

According to an aspect of the invention, the thickness of the clear adhesive layer is less than 500 µm.

According to an aspect of the invention, the display panel is chosen among liquid crystal display panel, light-emitting diode panel, organic light-emitting diode panel, and quantum light-emitting diode panel.

The invention also relates to a vehicle dashboard comprising the optical structure according to the invention.

The invention also relates to a method of manufacturing an optical structure according to the invention, the method comprising the following steps of:
- micro-perforating at least said textured layer and said protective layer, in particular a light-transmitting protective layer, to make a plurality of micro-perforations having dimensions below 100 µm, and
- arranging said micro-perforations such that the adjusted image is perceived through said micro-perforations by the observer.

According to an aspect of the invention, the method further comprises the following step prior to the step of micro-perforating at least said textured layer and said protective layer:
- assembling said textured layer with:
   o a light transmitting interlayer; and
   o a decorative layer.

According to an aspect of the invention, the method further comprises the step of:
- micro-perforating the light transmitting interlayer and the decorative layer at the same time as micro-perforating the textured layer and the protective layer.

According to an aspect of the invention, the method comprises the step of:
- laminating the optical structure on a support substrate using a clear adhesive layer between the optical structure and the support substrate.

According to an aspect of the invention, the method further comprises the step of:
- overmolding, in particular using in-mold labelling, the optical structure according to the invention in said optical display device.

According to an aspect of the invention, the method further comprises the step of:
- placing the optical structure in a mold that has the shape of the optical display device; and
- back-injecting a thermoplastic resin into the mold.

Further advantages, features and details of the invention will be apparent from the following description of a preferred example embodiment and with the aid of the drawings, showing in:
- Figure 1 is a cross-sectional view of an image display system comprising an embodiment of the optical structure according to the invention,
- Figure 2 shows a cross-section view of an image display system comprising an alternative embodiment of the optical structure according to the invention,
- Figure 3 shows a top view of an initial image emitted by an image emitting device, the initial image being seen just above said image emitting device,
- Figure 4 shows a top view of an adjusted image seen from an observer's side,
- Figure 5 shows a schematic and enlarged view of the micro-perforations in a tactile pattern in a textured layer,
- Figure 6 illustrates a cross-sectional and partial view of an image display system of the embodiment of figure 1, illustrating the tactile pattern in the textured layer and a visible pattern in a decorative layer,
- Figure 7 shows a cross-sectional view of a first embodiment of an image display system assembled by lamination,
- Figure 8 shows a cross-sectional view of a second embodiment of an image display system assembled by lamination,
- Figure 9 shows a cross-sectional view of a first embodiment of an image display system assembled by overmolding,
- Figure 10 shows a cross-sectional view of a second embodiment of an image display system assembled by overmolding.

Identical components or respectively components with the same function are provided with the same reference numbers in the figures.

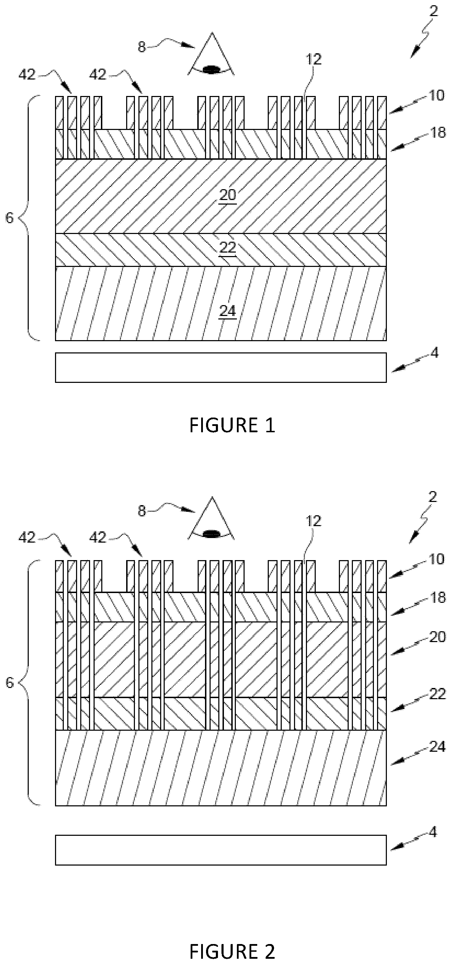

Referring to figures 1 to 2 and 7 to 10, an image display system 2 according to the invention comprises:
- a display panel 4 forming an image emitting device 4; and
- an optical structure 6 placed on the observer's side 8 of the image display system 2.

Said optical structure 6 comprises a textured layer 10 placed on an observer's side 8 of the optical structure 6 and a light transmitting protective layer 18 placed between the textured layer 10 and the image emitting device 4.

Said optical structure 6 comprises a plurality of micro-perforations 12 in the textured layer 10 and in the light transmitting protective layer 18, said micro-perforations 12 having dimensions D below 100 µm. The textured layer 10 and the light transmitting protective layer 18 are entirely micro-perforated.

Referring to figures 1 to 4 and 7 to 10, the optical structure 6 is placed in front of the display panel 4 forming the image emitting device 4 configured to emit an initial image 14 adjusted by the optical structure 10 to form an adjusted image 16 visible to an observer 8.

Said micro-perforations 12 are arranged such that the adjusted image 16 is perceived through said micro-perforations 12 by the observer 8.

It is remarkable that the presence of micro-perforations 12 in said textured layer 10 improves the image sharpness by correcting the light scattering occurring at the textured layer 10.

As a result, the adjusted image 16 passing through the micro-perforations 12 has an improved sharpness compared with an adjusted image 16 passing through the textured layer 10 and the protective layer 18 without any micro-perforation 12.

Furthermore, this invention provides a textured layer 10 that can be perceptible by the touch of a human body part, together with an adjusted image 16 with an improved sharpness on this textured layer 10.

The optical structure 6 further comprises successively, from the observer's side 8 to the display panel 4 forming the image emitting device 4:
- a light transmitting interlayer 20 made of polymethyl methacrylate (PMMA); and
- a decorative layer 22;
- a light transmitting reinforcing layer 24 made of polycarbonate (PC) placed between the decorative layer 22 and the image emitting device 4.

The light transmitting protective layer 24 provides protection against scratches to increase the general durability of the optical structure 6.

The textured layer 10 and the light transmitting protective layer 18 have substantially a same chemical composition.

The textured layer 10 and the light transmitting protective layer 18 are made of semi-transparent ink 26.

In the embodiment of figure 1, said micro-perforations 12 extend only through the thickness of the textured layer 10 and the light transmitting protective layer 18.

In this case, the other layers 20, 22, 24 underneath the textured layer 10 and the light transmitting protective layer 18 are not micro-perforated.

In the embodiment of figure 2, said micro-perforations 12 extend through the thickness of the textured layer 10, the light transmitting protective layer 18, the light transmitting interlayer 20 and the decorative layer 22.

In this case, the layer 24 underneath textured layer 10, that is, the light transmitting protective layer 18, the light transmitting interlayer 20 and the decorative layer 22 are not micro-perforated.

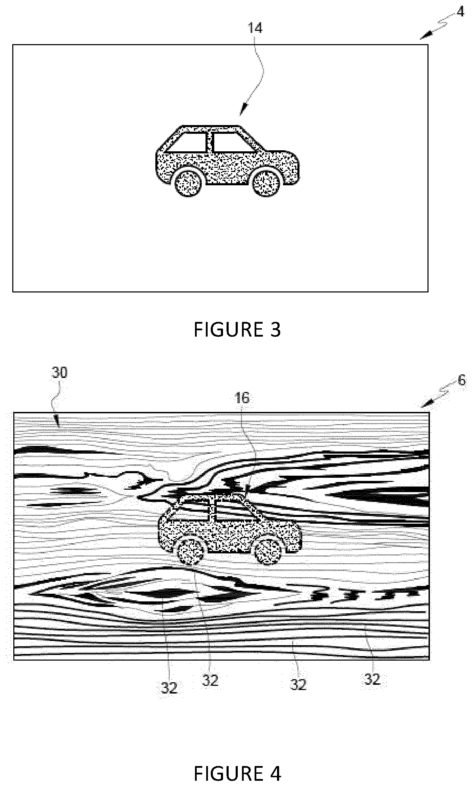

Referring to figure 4, the optical structure 6 comprises the decorative layer 22 comprising a decoration 30 formed by visible patterns 32 having a shape of wood veins forming a decoration 30 that is visible from the observer's side 8.

The textured layer 10 and the light transmitting protective layer 18 also contribute to the decoration 30 by modifying the color of the wood veins 32 of the decorative layer 22.

As illustrated on figures 1 to 2, and 7 to 10, the textured layer 10 has a plurality of tactile patterns 42, the dimensions 46, 48 of which are selected so that said tactile patterns 42 can be perceptible by the touch of a human body part. That is, the height 46 of each tactile pattern is superior to 5 µm. The width 48 of each tactile pattern is ranging between 200 µm and 5 mm.

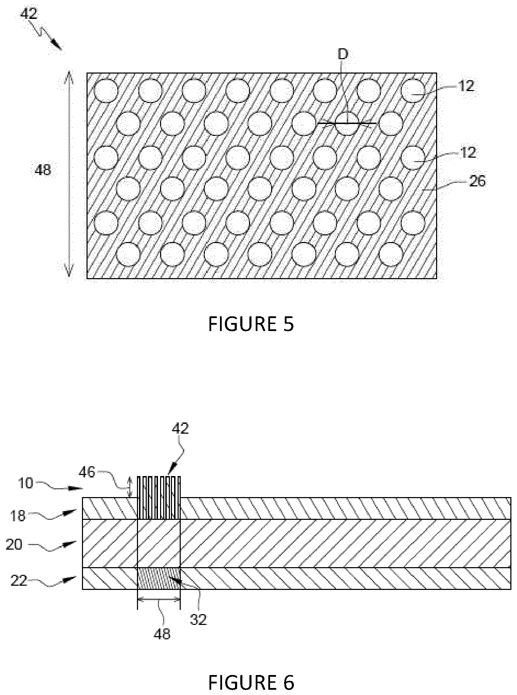

These micro-perforations having the dimensions D below 100 µm are not discernable by the touch of human body part. Therefore, the tactile sensations are only provided by the presence of one or a plurality of tactile patterns 42. Referring to figure 5, the each tactile pattern 44 corresponding to a wood vein 32 is entirely micro-perforated. These micro-perforations 12 are sufficiently small that the observer 8 can only see an overall picture of the group, but not an individual micro-perforation 12.

Referring to figure 5, the sectional view of said micro-perforations 12 in the tactile pattern 42 has a circular shape. The diameter D of the circular micro-perforations 12 is below 100 µm.

Figure 6 illustrates a cross-sectional and partial view of an image display system 2 of the embodiment of figure 1, illustrating a tactile pattern 42 in the textured layer 10 and a visible pattern 32 in the decorative layer 22. In the example of figure 6, only one tactile pattern 42 is illustrated for representation purposes although the textured layer 10 has a plurality of tactile patterns 42 and the decorative layer 22 has a plurality of visible patterns 32, as illustrated in figures 1 to 2, 4 and 7 to 10.

Referring to figures 4 and 6, the width of each visible pattern 32 is also ranging between 200 µm and 5 mm. With reference to the example in figure 6 which applies to all embodiments of the invention, the tactile patterns 42 of the textured layer 10 overlap the visible patterns 32 (or wood veins 32) of the decorative layer 22. Each tactile pattern 42 in the textured layer 10 corresponds to the wood vein 32 in the decorative layer that has the appearance of the cross-section of a wood. Therefore, the visible 32 and tactile patterns 42 have both a shape of wood veins 32.

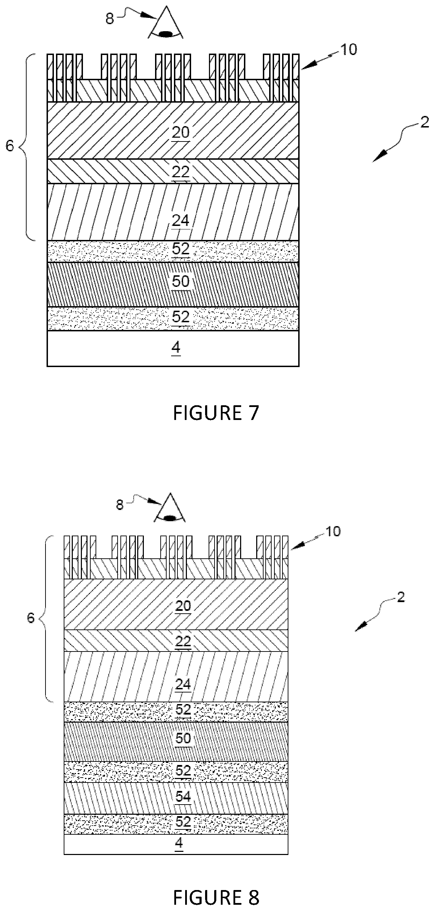

The embodiments of figures 7 and 8 represent the image display systems 2 assembled with lamination.

According to the particular embodiment of figure 7, the image display system 2 comprises successively, from the observer's side 8 to the display panel 4:
- the optical structure 6;
- a support substrate made of glass 50 between two optical clear adhesive (OCA) layers 52; and
- a display panel 4 forming the image emitting device 4.

The "support substrate" 50 is an intermediate protection plate to protect the optical structure 6 and the display panel 4 from any mechanical stresses.

According to the particular embodiment of figure 8, the image display system 2 comprises successively, from the observer's side 8 to the display panel 4:
- the optical structure 6;
- the support substrate made of PC 50 between two OCA layers 52;
- a touch panel 54 on an OCA layer 52; and
- a display panel 4 forming the image emitting device 4.

In this example in figure 8, the support substrate 50 can be also made of glass.

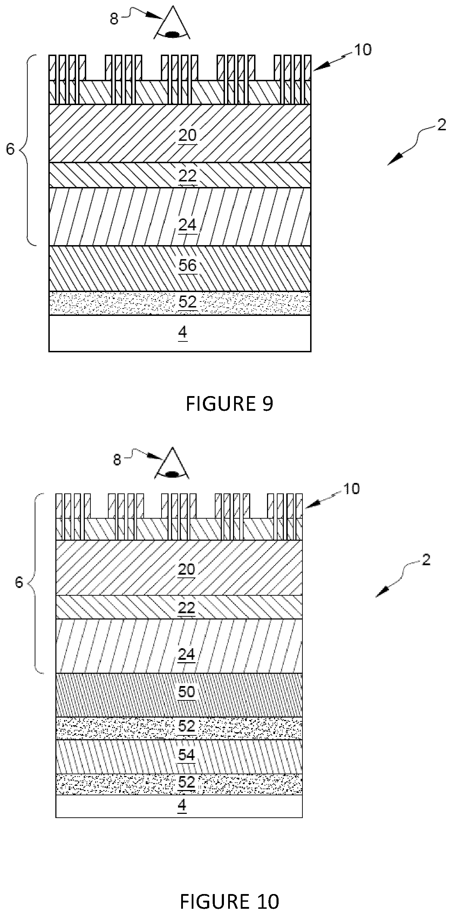

The embodiments of figures 9 and 10 represent the image display systems 2 assembled with in-mold labelling.

According to the particular embodiment of figure 9, the image display system comprises successively, from the observer's side to the image emitting device:
- the optical structure 6;
- a thermoplastic layer 56;
- an OCA layer 52; and
- a display panel 4 forming the image emitting device 4.

According to the particular embodiment of figure 10, the image display system 2 comprises successively, from the observer's side 8 to the image emitting device 2:
- the optical structure 6;
- a thermoplastic layer 56;
- a touch panel 54 between two OCA layers 52; and
- a display panel 4 forming the image emitting device 4.

The invention also relates to a vehicle dashboard (not-represented) comprising the optical structure 6. The optical structure 6 can be integrated to a vehicle dashboard so that a user can touch and interact with the textured layer 10. The optical structure 6 can be used to display any kind of adjusted images 16 issued from initial images 14 such as motion image, static image or successive series of images. The "image" is used to display, in a non-exhaustive manner, the following information: "GPS information", "Speed counter", "Temperature information", "Tachymeter", "Decorative information" etc.

The display panel 4 can be chosen among liquid crystal display panel, light-emitting diode panel, organic light-emitting diode panel, and quantum light-emitting diode panel.

For all the embodiments of the invention, the light transmittance of the optical structure 6 is ranging between 15 and 35% and the thickness of the OCA layer 52 is less than 500 µm.

For the embodiments of figures 7 to 10, said micro-perforations 12 can extend:
- only through the thickness of the textured layer 10 and the light transmitting protective layer 18, or
- through the thickness of the textured layer 10, the light transmitting protective layer 18, the light transmitting interlayer 20 and the decorative layer 22.

The here-above embodiments are illustrative and not restrictive embodiments. Obviously, many modifications and variations of the present invention are possible in the light of the above teachings without deviating from its inventive concept. It has therefore to be understood that the invention may be practiced otherwise that as specifically described.

## Claims

1. An optical structure (6) configured to be placed in front of an image emitting device (4) configured to emit an initial image (14) adjusted by the optical structure (6) to form an adjusted image (16) visible to an observer (8), and said optical structure (6) comprising:
- a textured layer (10) placed on an observer's side (8) of the optical structure (6),
- a protective layer (18) placed between the textured layer (10) and the image emitting device (4), said protective layer (18) is preferably a light transmitting protective layer (18),
wherein said optical structure (6) comprises a plurality of micro-perforations (12) in the textured layer (10) and in the protective layer (18), said micro-perforations (12) having dimensions (D) below 100 µm, and
said micro-perforations (12) are arranged such that the adjusted image (16) is perceived through said micro-perforations (12) by the observer (8).

2. The optical structure (6) according to claim 1, further comprising successively, from the observer's side (8) to the image emitting device (4):
- a light transmitting interlayer (20), in particular made of a material selected from polymethyl methacrylate (PMMA), and other polymers having optical properties and hardness equivalent to those of PMMA; and
- a decorative layer (22).

3. The optical structure (6) according to claim 2, further comprising a light transmitting reinforcing layer (24) placed between the decorative layer (22) and the image emitting device (4).

4. The optical structure (6) according to claim 2 or 3, wherein the decorative layer (22) comprises a decoration (30) formed by:
- visible patterns (32) forming a decoration (30) that is visible from the observer's side (8).

5. The optical structure (6) according to claim 4, wherein the visible patterns (32) are, for example, chosen among the following patterns:
- wood veins, hair lines, geometric tones, silk fabric, grippy texture, rubber texture

6. The optical structure (6) according to any one of the preceding claims, wherein the textured layer (10) has a plurality of tactile patterns (42), the dimensions (46, 48) of which are selected so that said tactile patterns (42) can be perceptible by the touch of a human body part.

7. The optical structure (6) according to claim 6, wherein each tactile pattern (42) has a region with a plurality of micro-perforations (12).

8. The optical structure (6) according to any one of claims 2 to 7, wherein said micro-perforations extend only through the thickness of the textured layer and the protective layer.

9. The optical structure (6) according to any one of claims 2 to 7, wherein said micro-perforations (12) extend through the thickness of the textured layer (10), the protective layer (18), the light transmitting interlayer (20) and the decorative layer (22).

10. The optical structure (6) according to any one of the preceding claims, wherein the light transmittance of the optical structure is lower than 50%, preferably lower than 40%. The light transmittance is ranging between 15 and 35%.

11. An image display system (2) comprising:
- a display panel (4) forming the image emitting device (4); and
- the optical structure (6) according to any one of the claims 1 to 10 placed on the observer's side (8) of the image display system (2).

12. The image display system (2) according to claim 11, further comprising:
- a touch panel (54);
- at least one extruded plastic layer (56), such as a thermoplastic layer;
- at least one layer of clear adhesive layer (52), such as optical clear adhesive (OCA) layer or optical clear resin (OCR) layer; and/or
- at least one support substrate (50) made of a material such as polycarbonate (PC) or a glass.

13. A vehicle dashboard comprising the optical structure (6) according to any one of the claims 1 to 10.

14. A method of manufacturing an optical structure (6) according to any one of the claims 1 to 10, the method comprising the following steps of:
- micro-perforating at least said textured layer (10) and said protective layer (18), in particular a light transmitting protective layer (18), to make a plurality of micro-perforations (12) having dimensions (D) below 100 µm, and
- arranging said micro-perforations (12) such that the adjusted image (16) is perceived through said micro-perforations (12) by the observer (8).
